# EUROPÄISCHE PATENTANMELDUNG

(11) **EP 3 745 110 A1**
(43) Veröffentlichungstag der Anmeldung: **02.12.2020**
(21) Anmeldenummer: 20175094.0
(22) Anmeldetag: 15.05.2020
(51) Int. Cl.: G01L 25/00, G01M 17/007, G01L 5/28

(54) **VORRICHTUNG UND VERFAHREN ZUM PRÜFEN UND/ODER KALIBRIEREN EINES PRÜFSTANDS**

(30) Priorität: 17.05.2019 DE 102019113186
(71) Anmelder: Cartesy GmbH, 84453 Mühldorf Bayern (DE)
(72) Erfinder: FEMBÖCK, Josef, 84524 Neuötting (DE)
(74) Vertreter: Lichtnecker, Markus Christoph

(57) **Zusammenfassung**

Die Erfindung betrifft eine Vorrichtung zum Prüfen und/oder Kalibrieren eines Prüfstands, insbesondere für Kraftfahrzeuge, umfassend eine Messvorrichtung, die dazu ausgebildet ist, eine am Außenumfang einer Prüfrolle des Prüfstands wirkende Tangentialkraft zu messen, und eine Steuerungsvorrichtung, die dazu ausgebildet ist, einen bei einer Fahrzeugprüfung die Prüfrolle antreibenden Antrieb des Prüfstands derart zu steuern, dass der Antrieb die zum Prüfen und/oder Kalibrieren des Prüfstands benötigte Kraft einleitet, wobei der Antrieb die Prüfrolle um wenigstens eine viertelte Rollenumdrehung in Rotation versetzt.

## Beschreibung

Die Erfindung betrifft eine Vorrichtung, ein System sowie ein Verfahren zum Prüfen und/oder Kalibrieren eines Prüfstands, insbesondere für Kraftfahrzeuge.

Bei Prüfständen, z.B. Rollenprüfständen, für Kraftfahrzeuge werden Kräfte gemessen, welche beim Beschleunigen und/oder beim Bremsen, d.h. bei einer negativen Beschleunigung, auf die Radaufstandsflächen der Reifen wirken.

Die Messung der Kräfte erfolgt hierbei drehmomentbasiert. Ein Kraftfahrzeugrad steht hierbei auf einer Prüfrolle, welche mit einem Antriebsmotor über eine Antriebswelle verbunden ist. Der Antriebsmotor ist pendelnd gelagert. Eine Gegenstütze ist als Kraftsensor ausgeführt. Wird das Kraftfahrzeugrad beschleunigt oder abgebremst, überträgt sich die dabei entstehende Kraft über einen Krafteinleitungsbereich auf die Prüfrolle. Diese Kraft wird über die Gegenstütze, also den Kraftsensor, gemessen. Die Messung der Kraft erfolgt indirekt über eine Drehmomentmessung.

Ein erster Hebel reicht vom Mittelpunkt der Prüfrolle bis zum Bereich der Krafteinleitung auf der Rollenoberfläche. Ein zweiter Hebel erstreckt sich vom Mittelpunkt der Prüfrolle zur Gegenstütze. Die Kraft an der Gegenstütze ergibt sich dadurch im Verhältnis vom ersten zum zweiten Hebel.

Zum Prüfen und/oder Kalibrieren eines Prüfstands wird direkt am Kraftsensor eine Referenzkraft eingeleitet. Dies geschieht durch ein Anbringen von Krafthebeln, auf die ein Gewicht aufgelegt wird, oder durch Krafthebel, in deren Kraftfluss ein Referenzkraftsensor eingebaut ist.

Nachteilig daran ist, dass die beiden realen mechanischen Hebel dabei jedoch nicht mit berücksichtigt werden. Diese werden einmalig berechnet und als gegeben hingenommen.

Zudem entsteht beim Anbringen der Hebelmechanik ein anderes Hebelverhältnis als das vom ersten zum zweiten Hebel.

Es wird daher mit dieser Art der Kalibrierung nur die Messkette ab dem Kraftsensor bis zu einer Messanzeige kalibriert. Ändert sich jedoch das Verhältnis des ersten Hebels zum zweiten Hebel, so findet dies keine Berücksichtigung. Eine Änderung des Hebelverhältnisses tritt jedoch häufig auf, beispielsweise wenn die Prüfrolle durch mechanische Beanspruchung beim Prüfen im Laufe der Zeit abgefahren wird. Der Durchmesser der Prüfrolle verringert sich hierbei, wodurch sich auch das Verhältnis vom ersten zum zweiten Hebel verändert.

Ferner haben Prüfhebel mit Referenzgewichten zudem den Nachteil, dass alle Gewichte der Erdanziehung unterliegen. Deshalb müsste hierbei eigentlich der örtliche Gravitationswert bekannt sein und berücksichtigt werden. Auch unterliegen mit Referenzgewichten belastete Prüfhebel zudem noch sehr vielen anderen Einflüssen, die beim Belasten entstehen. So erzeugt jede Last eine Deformierung des Hebels, was wiederum eine Änderung des Hebelverhältnisses zur Folge hat und wieder korrigiert werden muss.

Ein weiterer Nachteil besteht darin, dass der Prüfstand zum Kalibrieren geöffnet werden muss und die Krafthebel montiert werden müssen.

Es ist bekannt, eine Prüfachse auf die Prüfrolle aufzusetzen. Die Räder der Prüfachse werden abgebremst und das Gegenstützmoment wird an der Prüfachse in Form einer Drehmomentmessung gemessen. Die eingeleitete Kraft wird dann mit der Kraft, die am Rollenprüfstand angezeigt wird, verglichen.

Der Prüfstand muss hierbei zwar nicht geöffnet werden. Jedoch ist auch dieses Prüfverfahren drehmomentbasierend und unterliegt daher denselben Fehlern.

Eine Veränderung des Raddurchmessers der Prüfachse führt hier ebenso zu einer Veränderung der Hebelverhältnisse. Zudem sind noch viele weitere Faktoren vorhanden, die zu einer Verfälschung der Messungen führen.

Gemäß gesetzlichen Vorgaben muss ein Prüfstand bei hoher Genauigkeit regelmäßig kalibriert werden. Diese hohe Genauigkeit wird jedoch, beispielsweise aufgrund der Abnutzung der Prüfrolle, welche nicht in die Messung mit einfließt, mit bisherigen Prüfvorrichtungen nicht erreicht.

DE 20 2017 101 176 U1 offenbart eine Vorrichtung zum Prüfen und/oder Kalibrieren eines Prüfstands mit einer Messvorrichtung, die dazu ausgebildet ist, eine am Außenumfang einer Prüfrolle des Prüfstands wirkende Tangentialkraft zu messen.

Die Tangentialkraft wird am Außenumfang der Prüfrolle gemessen. Da die Tangentialkraft direkt gemessen wird, muss keine indirekte Kraftmessung über ungenaue Drehmomentsensoren oder dergleichen erfolgen. Auch Abnutzungen der Prüfrolle haben aufgrund der direkten Messung keinen negativen Einfluss auf die Prüfung bzw. Kalibrierung.

Die zum Prüfen und/oder Kalibrieren benötigte Kraft wird dabei extern eingeleitet, d.h. es ist eine zusätzliche Krafterzeugung notwendig.

DE 20 2015 000 991 U1 offenbart eine Kalibriereinrichtung und eine Kalibriervorrichtung für Kraftfahrzeug-Rollenprüfstände.

Der Motor der Rolle des Prüfstands wird zwar zur Kalibrierung betätigt. Wird als Motor ein Kurzschlussläufermotor verwendet, darf dieser jedoch nicht zum Stillstand kommen, da ansonsten die Stromaufnahme exorbitant ansteigt.

Die Referenzkraft wird schließlich an einem Lagerpunkt gemessen. Hierzu ist die Kenntnis eines Hebelverhältnisses bezüglich des Referenzgewichts notwendig.

Bei der in DE 20 2015 000 991 U1 beschriebenen Anordnung ist es nahezu unmöglich, dass der Motor einen signifikanten Weg zurücklegt. Sobald der Motor nämlich läuft, zieht dieser über den Hebel das Referenzgewicht in die Höhe.

Ferner würde bei der aus DE 20 2015 000 991 U1 bekannten Anordnung das Gewicht sofort auf den Boden fallen, wenn der Motor kein permanentes Gegenmoment erzeugt.

Da die Referenzmessdose auf Druck belastet und auf einem Gestänge montiert ist, verbiegt sich dieses unter Last und verfälscht das Ergebnis.

Wenn sich der Lasthebel hebt, verändert sich sofort das Hebelverhältnis.

Die Kalibrierung und/oder Funktionsprüfung eines Elektromotors im Stillstand oder mit ganz wenig Weg ist technisch bei einem Kurzschlussläufer nicht möglich. Ferner ist das Drehmoment bzw. eine Drehmomentkennlinie des Motors mit diesem Aufbau nicht kalibrierbar bzw. bestimmbar. Auch wird in DE 20 2015 000 991 U1 nicht beschrieben, dass eine Drehmomentstütze kalibriert wird.

Signifikante Rollenumdrehungen und/oder Bewegungen sind aufgrund des in DE 20 2015 000 991 U1 beschriebenen Aufbaus nicht möglich. Dies ist jedoch für ein exaktes Prüfen bzw. Kalibrieren wichtig.

Es ist daher eine Aufgabe der Erfindung, eine Vorrichtung, ein System sowie ein Verfahren zum Prüfen und/oder Kalibrieren eines Prüfstands zu schaffen, welche/s auf einfache und kostengünstige Weise ein präzises Prüfen bzw. Kalibrieren ermöglicht.

Die Lösung dieser Aufgabe erfolgt durch die Gegenstände bzw. das Verfahren der unabhängigen Ansprüche.

Erfindungsgemäß umfasst die Vorrichtung zum Prüfen und/oder Kalibrieren eines Prüfstands eine Messvorrichtung, die dazu ausgebildet ist, eine am Außenumfang einer Prüfrolle des Prüfstands wirkende Tangentialkraft zu messen.

Bei dem Prüfstand kann es sich beispielsweise um einen Prüfstand, z.B. ein Rollenbremssystem, für Kraftfahrzeuge, insbesondere PKWs und/oder LKWs, handeln. Grundsätzlich sind jedoch beliebige Prüfstände denkbar, insbesondere für Wälzlager, beispielsweis in der Papier- und/oder Textilindustrie.

Erfindungsgemäß wird die Tangentialkraft am Außenumfang der Prüfrolle gemessen. Da die Tangentialkraft direkt gemessen wird, muss keine indirekte Kraftmessung über ungenaue Drehmomentsensoren oder dergleichen erfolgen. Auch Abnutzungen der Prüfrolle haben aufgrund der direkten Messung keinen negativen Einfluss auf die Prüfung bzw. Kalibrierung.

Die erfindungsgemäße Prüfvorrichtung ermöglicht somit auf einfache und kostengünstige Weise ein präzises Prüfen bzw. Kalibrieren eines Prüfstands.

Die Vorrichtung umfasst eine Steuerungsvorrichtung, die dazu ausgebildet ist, einen bei einer Fahrzeugprüfung die Prüfrolle antreibenden Antrieb des Prüfstands derart zu steuern, dass der Antrieb die zum Prüfen und/oder Kalibrieren des Prüfstands benötigte Kraft einleitet.

Der Antrieb erfüllt somit eine Doppelfunktion. So treibt der Antrieb einerseits bei einer normalen Prüfung eines Fahrzeugs die Prüfrolle an. Anderseits wird der Antrieb bei einer Prüfung und/oder Kalibrierung des Prüfstands dazu verwendet, die benötigte Kraft einzuleiten.

Da der Antrieb ohnehin vorhanden ist, kann auf zusätzliche Bauteile, insbesondere Krafterzeuger, verzichtet werden. Dadurch gestaltet sich der Aufbau einfach und kostengünstig.

Der Antrieb ist insbesondere als Motor, vorzugsweise Elektromotor, ausgebildet.

Die Steuerung ist dazu ausgebildet, den Antrieb die Prüfrolle um wenigstens eine viertelte Rollenumdrehung in Rotation zu versetzen. Vorzugsweise wird die Prüfrolle um wenigstens 1/3, 1/2, 2/3, 3/4 oder eine ganze Rollenumdrehung in Rotation versetzt. Auf diese Weise wird ein signifikanter Weg zurückgelegt.

Der Antrieb bewegt sich während der Prüfung und/oder Kalibrierung. Dadurch wird insbesondere vermieden, dass die Stromaufnahme exorbitant ansteigt, wodurch Beschädigungen des Antriebs auftreten könnten. Steht nämlich ein Rotor des Antriebs, so nimmt dieser sehr viel Strom auf und überhitzt.

Der Antrieb selbst befindet sich folglich insbesondere im normalen Betriebsmodus und wird vorzugsweise nicht im Stillstand betrieben oder im Kippmoment gefahren. Es war überraschend, dass dies durch die Bereitstellung eines ausreichenden Wegs ermöglicht wird.

Bei stehendem Antrieb wird die Prüfrolle insbesondere nicht belastet. Der Antrieb wird zum Prüfen und/oder Kalibrieren des Prüfstands vorzugsweise nicht blockiert.

Mittels der Steuerungsvorrichtung kann der Antrieb vorwärts und/oder rückwärts bewegt werden.

Durch die Vorrichtung zum Prüfen und/oder Kalibrieren eines Prüfstands ist es insbesondere möglich, eine Drehmomentstütze zu kalibrieren. Alternativ oder zusätzlich kann eine Drehmomentkennlinie des Antriebs ermittelt werden.

Vorzugsweise ist die Messvorrichtung dazu ausgebildet, eine drehmomentbasierte Messung des Prüfstands zu prüfen und/oder zu kalibrieren. Bei den meisten Prüfständen für Kraftfahrzeuge erfolgt die Messung drehmomentbasiert. Aufgrund der bereits beschriebenen Effekte ist eine derartige Messung im Laufe der Zeit jedoch fehlerbehaftet. Umso wichtiger ist es, gerade diese drehmomentbasierten Messungen zu prüfen bzw. zu kalibrieren.

Bei herkömmlichen Prüfvorrichtung erfolgt jedoch auch die Prüfung und/oder Kalibrierung ebenfalls drehmomentbasiert, wodurch die negativen Effekte nicht erkannt werden. Es ist daher gerade bei Prüfständen, die mittels einer drehmomentbasierten Messung arbeiten, vorteilhaft, bei der Prüfung bzw. beim Kalibrieren des Prüfstands eine alternative Messvorrichtung zu verwenden, welche nicht auf einer Drehmomentmessung basiert. Eine Messung der Tangentialkraft, welche am Außenumfang der Prüfrolle wirkt, ist dabei vorteilhaft, da die negativen Effekte erfasst werden.

Die Messvorrichtung ist insbesondere dazu ausgebildet, die gesamte Messkette des Prüfstands zu prüfen und/oder zu kalibrieren. Während die Kalibrierung bei herkömmlichen Prüfvorrichtungen lediglich ab dem Kraftsensor bis zur Messanzeige erfolgt, wird erfindungsgemäß die gesamte Messkette kalibriert. Die gesetzlichen Vorgaben werden auf diese Weise erfüllt.

Insbesondere werden mechanische Abnutzungen der Prüfrolle und/oder eine Veränderung von Krafteinleitungshebeln berücksichtigt. Eine Kalibrierung erfolgt somit auch nach längerem Betrieb, wenn die Prüfrolle bereits abgenutzt ist, stets exakt. Abweichungen in der drehmomentbasierten Messung aufgrund dieser Effekte werden folglich bemerkt und entsprechend berücksichtigt.

Beispielsweise kann eine Messeinheit der Messvorrichtung als Zugkraftmesser und/oder Druckkraftsensor ausgebildet sein. Insbesondere kann die Messeinheit zumindest einen Dehnungsmessstreifen umfassen. Auch kann eine Anordnung aus mehreren Dehnungsmessstreifen, z.B. eine Halb- oder Vollbrücke, vorgesehen sein.

Beispielsweise kann es sich bei dem Zugkraftmesser um eine herkömmliche Zugwaage handeln. Ein Zugkraftmesser kann insbesondere dann eingesetzt werden, wenn die Prüfrolle angetrieben ist.

Ein Druckkraftsensor kann beispielsweise eingesetzt werden, wenn die Prüfrolle als Bremse fungiert. Ob die Messeinheit als Zugkraftmesser oder als Druckkraftsensor ausgebildet ist, liegt letztlich an der Positionierung der Messeinheit.

Insbesondere greift eine Messeinheit der Messvorrichtung die zu messende Tangentialkraft unmittelbar ab. Fehlerquellen werden dadurch minimiert, da die Tangentialkraft unmittelbar und insbesondere ohne Zwischenschaltung weiterer Bauteile gemessen wird.

Weiterbildungen der Erfindung sind auch den abhängigen Ansprüchen, der Beschreibung sowie den beigefügten Zeichnungen zu entnehmen.

Gemäß einer Ausführungsform umfasst die Steuerungsvorrichtung einen Frequenzumrichter. Durch den Frequenzumrichter kann die Frequenz des Antriebs geändert werden. Während die Frequenz bei einer Prüfung eines Fahrzeugs im Bereich von z.B. 50 Hz liegt, kann die Frequenz beim Prüfen und/oder Kalibrieren des Prüfstands z.B. zwischen 1 Hz und 10 Hz, vorzugsweise zwischen 2 Hz und 5 Hz, z.B. bei 3 Hz, liegen.

Vorzugsweise ist der Frequenzumrichter steckbar ausgebildet. So kann der Frequenzumrichter z.B. an den Antrieb und/oder die Steuerungsvorrichtung gesteckt werden. Insbesondere kann die gesamte Steuerungsvorrichtung steckbar ausgebildet sein und z.B. an den Antrieb gesteckt werden.

Nach einer weiteren Ausführungsform ist eine Referenzkrafterzeugung vorgesehen, welche, insbesondere elektrisch, verstellbar ist.

Die Referenzkrafterzeugung kann insbesondere einen für das Prüfen und/oder Kalibrieren des Prüfstands erforderlichen Weg bereitstellten.

Die Referenzkrafterzeugung kann vorzugsweise als Gegenmomentsystem ausgebildet sein.

Durch die Verstellbarkeit bietet die Referenzkrafterzeugung einen Mehrwert gegenüber statischen Gegengewichten. Insbesondere können verschiedene Messpunkte angefahren und/oder unterschiedliche Messwege eingestellt werden.

Gemäß einer weiteren Ausführungsform umfasst die Referenzkrafterzeugung einen Zylinder, insbesondere Hydraulik- und/oder Pneumatikzylinder, und/oder eine Feder oder ist als solche ausgebildet.

Der Zylinder kann vorzugsweise eine Ölbremse aufweisen.

Gegengewichte sind insbesondere nicht vorgesehen.

Nach einer weiteren Ausführungsform ist eine Referenzkrafterzeugung unmittelbar im Tangentialzweig angeordnet.

Der Tangentialzweig entspricht dem tangentialen Belastungszweig. Insbesondere ist die Referenzkrafterzeugung im direkten Kraftfluss einer Messhilfe angeordnet.

Vorzugsweise ist kein Hebel, z.B. ein Lasthebel, vorgesehen. Beispielsweise ist auch keine Umlenkung, Schneide oder dergleichen vorgesehen, d.h. die Referenzkrafterzeugung ist direkt im Belastungszweig angeordnet. Fehlerfaktoren werden dadurch vermieden.

Insbesondere kann ein Referenzkraftsensor unmittelbar im Tangentialzweig angeordnet sein.

Gemäß einer weiteren Ausführungsform ist eine Messhilfe vorgesehen.

Nach DE 20 2017 101 176 U1 können eine als Band ausgebildete Messhilfe und eine Befestigungsmöglichkeit vorgesehen sein. Die Befestigungsmöglichkeit ist an der Prüfrolle des Prüfstands befestigt. Hierbei muss die Prüfrolle eine Befestigungsmöglichkeit für das Band aufweisen, die bei herkömmlichen Prüfständen noch nicht existiert. Bisher eingesetzte Prüfrollen müssen daher modifiziert bzw. ausgetauscht werden, um die Prüfstände entsprechend nachzurüsten. Bei neuen Prüfrollen kann jedoch gleich eine Prüfrolle mit einer entsprechenden Befestigungsmöglichkeit vorgesehen sein.

Ein Ende des Bands wird somit durch die Befestigungsmöglichkeit, z.B. eine Schraubverbindung, an der Prüfrolle befestigt. Das andere Ende des Bands ist mit der Messeinheit der Messvorrichtung verbunden oder verbindbar.

Das Band umschlingt die Prüfrolle vorzugsweise um mindestens 180°, 200°, 220°, 250°, 270°, 300°, 330°, 350° oder 360°.

Insbesondere verläuft das Band am Außenumfang der Prüfrolle entlang und wird tangential zur Messeinheit geleitet. Die Position, an der das Band die Prüfrolle verlässt, hat dabei keinen Einfluss auf die Messung, da der Austritt stets tangential erfolgt und die Zugkraft immer in Rotation umgesetzt wird.

Auch in DE 20 2017 104 689 U1 wird eine Messhilfe offenbart, welche über eine Befestigungsmöglichkeit mit der Prüfrolle verbunden ist. Die Prüfrolle muss hierbei eine Befestigungsmöglichkeit für die Messhilfe aufweisen, z.B. eine Schraubverbindung.

Die Messhilfe kann demnach an einer Befestigungsmöglichkeit mit der Prüfrolle verbunden werden. Alternativ kann die Messhilfe auch mittels Selbsthemmung an der Prüfrolle befestigt werden.

Die Messhilfe umfasst hierbei eine Befestigungsvorrichtung zur Befestigung an einer Haltevorrichtung der Vorrichtung, insbesondere einer Referenzkrafterzeugung, und eine Positioniervorrichtung zur Positionierung an einer Prüfrolle des Prüfstands.

Bei der Messhilfe kann es sich insbesondere um ein Zugelement und/oder ein Krafteinleitungselement handeln.

Die Messhilfe kann ein Teil der Prüfvorrichtung sein. Vorzugsweise kann sich die Messhilfe tangential vom Außenumfang der Prüfrolle aus erstecken. Insbesondere wird somit die Tangentialkraft, welche am Außenumfang der Prüfrolle wirkt, gemessen.

Bei herkömmlichen Prüfvorrichtungen erfolgt die Prüfung und/oder Kalibrierung meist drehmomentbasiert, wie es auch bei der eigentlichen drehmomentbasierten Messung der Kraftfahrzeuge auf dem Prüfstand der Fall ist. Negative Effekte, z.B. bedingt durch Abnutzungserscheinungen der Prüfrolle, werden nicht erkannt. Es ist daher gerade bei Prüfständen, die mittels einer drehmomentbasierten Messung arbeiten, vorteilhaft, bei der Prüfung bzw. beim Kalibrieren des Prüfstands eine alternative Messvorrichtung zu verwenden, welche nicht auf einer Drehmomentmessung basiert. Eine Messung der Tangentialkraft, welche am Außenumfang der Prüfrolle wirkt, ist dabei vorteilhaft, da die negativen Effekte erfasst und berücksichtigt werden. Die gesetzlichen Vorgaben werden auf diese Weise erfüllt.

Die Messhilfe kann durch die Befestigungsvorrichtung an der Haltevorrichtung der Prüfvorrichtung befestigt werden. Die Haltevorrichtung kann vorzugsweise z.B. einen Karabiner und/oder Schäkel umfassen oder daraus bestehen.

Die Messhilfe umfasst eine Positioniervorrichtung zur Positionierung an einer Prüfrolle des Prüfstands. Auf diese Weise kann die Position der Messhilfe an der Prüfrolle festgelegt werden.

Die Positioniervorrichtung entspricht jedoch insbesondere keiner festen Fixierung bzw. Verankerung an der Prüfrolle. So ist die Haltekraft der Positioniervorrichtung an der Prüfrolle vorzugsweise kleiner als eine bei der Prüfung und/oder Kalibrierung auf die Messhilfe wirkende Zugkraft. Wird an der Messhilfe gezogen, würde sich die Positioniervorrichtung folglich von der Prüfrolle lösen.

Die Messhilfe umfasst einen sich zwischen der Befestigungsvorrichtung und der Positioniervorrichtung erstreckenden Verbindungsabschnitt, wobei der Verbindungsabschnitt selbsthemmend an der Prüfrolle befestigbar oder befestigt ist.

Der Verbindungsabschnitt ist insbesondere als sich längs erstreckendes und/oder flexibles, z.B. seil- oder bandartiges, Bauteil ausgebildet. Da der Verbindungsabschnitt nicht starr ist, kann dieser um die Prüfrolle gewickelt werden.

Vorzugsweise ist das Material der Messhilfe derart ausgebildet, dass sich die Messhilfe der Oberfläche der Prüfrolle anpassen kann.

Der Verbindungsabschnitt wird um den gesamten Umfang der Prüfrolle gewickelt, bis dieser mit sich selbst überlappt. Durch die Überlappung tritt eine Selbsthemmung auf, welche die Messhilfe an der Prüfrolle befestigt. Die durch die Selbsthemmung entstehende Haltekraft ist insbesondere größer als eine bei der Prüfung und/oder Kalibrierung auf die Messhilfe wirkende Zugkraft.

Durch die Positioniervorrichtung kann die Position der Messhilfe an der Prüfrolle festgelegt werden. Auch kann die Positioniervorrichtung die Messhilfe halten, bis der Verbindungsabschnitt einmal vollständig um die Prüfrolle gewickelt ist, sich überlappt und die Selbsthemmung auftritt. Die Positioniervorrichtung stellt somit gewissermaßen eine Aufwickel-Hilfe dar. Die eigentliche Befestigung erfolgt jedoch vorzugsweise werkzeuglos mittels der Selbsthemmung.

Die Messhilfe kann auf diese Weise universell auch an herkömmlichen Prüfrollen befestigt werden. So muss keine Befestigungsmöglichkeit bzw. müssen keine Befestigungspunkte an der Prüfrolle vorgesehen sein.

Dadurch kann die Messhilfe insbesondere schnell an der Prüfrolle befestigt werden.

Prüfrollen weisen eine Beschichtung auf, um hohe Reibwerte für Fahrzeugreifen zu erzeugen. Die Beschichtung kann eine Struktur aufweisen, z.B. Noppen. Die Noppen können insbesondere mindestens 1 mm bis 2 mm hoch sein.

Bisher war es daher kaum möglich, einen exakten Durchmesser der Prüfrolle zu definieren. Dadurch, dass die Messhilfe mindestens einmal, vorzugsweise mehrmals, um die Prüfrolle gewickelt wird, wird die Struktur wie bei einer Belastung durch ein Fahrzeug eingedrückt. Es findest somit automatisch eine praxisnahe Mittelung des Durchmessers der Prüfrolle statt, welche einer normalen Prüfsituation nachempfunden ist. So weist die Messhilfe ein reifenähnliches Anpressverhalten auf.

Die Messhilfe ist hierzu vorzugsweise vergleichsweise breit, z.B. breiter als 1 cm, 2 cm, 3 cm, 4 cm, 5 cm, 6 cm, 7 cm, 8 cm, 9 cm oder 10 cm. Dadurch kann eine Mittelung der Oberflächenrauhtiefe der Prüfrolle erfolgen. Dünne Stahlbänder oder Stangen sind hierfür insbesondere nicht geeignet.

Gemäß einer Ausführungsform ist die Länge des Verbindungsabschnitts größer als der Umfang der Prüfrolle.

Insbesondere ist der Verbindungsabschnitt mindestens 1,2 Mal, 1,3 Mal, 1,4 Mal, 1,5 Mal, 1,6 Mal, 1,7 Mal, 1,8 Mal, 1,9 Mal oder 2 Mal so lang wie der Umfang der Prüfrolle. Die Messhilfe kann die Prüfrolle daher vorzugsweise mindestens um 360°, 365°, 370°, 375°, 380°, 390°, 400°, 450°, 500°, 540°, 600°, 720°, 800°, 900° oder mehr umschlingen. Beispielsweise kann der Verbindungsabschnitt mehrfach um die Prüfrolle gewickelt werden. Je größer der Abschnitt ist, an dem sich der Verbindungsabschnitt überlappt, desto größer ist die selbsthemmende Haltekraft an der Prüfrolle.

Insbesondere kann der Verbindungsabschnitt eine Länge von mindestens 20 cm, 30 cm, 40 cm, 50 cm, 60 cm, 70 cm, 80 cm, 90 cm, 100 cm oder mehr aufweisen.

Der Durchmesser der Prüfrolle kann beispielsweise mindestens 50 mm, 100 mm, 150 mm, 200 mm, 250 mm, 300 mm oder mehr betragen.

Nach einer weiteren Ausführungsform umfasst die Messhilfe, insbesondere der Verbindungsabschnitt, ein Band, ein Seil und/oder ein Netz oder ist als solches ausgebildet.

Die Messhilfe, insbesondere der Verbindungsabschnitt, ist vorzugsweise als flexibles Zugmittel ausgebildet.

Gemäß einer weiteren Ausführungsform umfasst die Befestigungsvorrichtung eine Schlaufe oder ist als solche ausgebildet.

Über die Schlaufe kann die Messhilfe auf einfache Weise an einer Haltevorrichtung der Prüfvorrichtung, z.B. einem Karabiner und/oder Schäkel, befestigt werden.

Nach einer weiteren Ausführungsform umfasst die Positioniervorrichtung ein Klebemittel, insbesondere ein Klebeband, oder ist als solches ausgebildet. Vorzugsweise kann ein herkömmliches Klebeband an einem Ende des Verbindungsabschnitts befestigt, insbesondere festgeklebt, werden. Der Verbindungsabschnitt kann somit zumindest vorübergehend an der Prüfrolle positioniert werden. Eine feste Verbindung, beispielsweise eine Schraub- oder Klemmverbindung, mit der Prüfrolle ist insbesondere nicht vorgesehen.

Die Positioniervorrichtung fixiert die Messhilfe an der gewünschten Position, bis sich der Verbindungsabschnitt überlappt und eine Selbsthemmung auftritt.

Die Erfindung betrifft auch ein System mit einer erfindungsgemäßen Vorrichtung zum Prüfen und/oder Kalibrieren eines Prüfstands, insbesondere für Kraftfahrzeuge, und einem Prüfstand mit zumindest einer Prüfrolle und einem Antrieb für die Prüfrolle.

Der Antrieb der Prüfrolle kann durch die Steuerungsvorrichtung angetrieben werden.

Insbesondere kann die Steuerungsvorrichtung dazu ausgebildet sein, den bei einer Fahrzeugprüfung die Prüfrolle antreibenden Antrieb des Prüfstands derart zu steuern, dass der Antrieb die zum Prüfen und/oder Kalibrieren des Prüfstands benötigte Kraft einleitet. Der Antrieb versetzt die Prüfrolle dabei um wenigstens eine viertelte Rollenumdrehung in Rotation.

Vorzugsweise kann die Vorrichtung, insbesondere mittels eines Gestells, ohne Fixierung auf den Prüfstand aufgesetzt werden, da die Kalibrierkraft gegen die Erdanziehung wirkt. Dadurch wird der Auf- und/oder Abbau der Vorrichtung beschleunigt und die für die Prüfung benötigte Zeit reduziert.

Gemäß einer Ausführungsform ist die Messhilfe derart um die Prüfrolle geführt oder führbar, dass der Verbindungsabschnitt zumindest abschnittsweise überlappt.

Der Verbindungsabschnitt ist somit mehr als einmal um die Prüfrolle gewickelt. Ist der Verbindungsabschnitt zwei Mal, drei Mal oder öfters um die Prüfrolle gewickelt, kann sich die Dicke des Bandes, welche z.B. zwischen 0,5 mm und 2 mm liegen kann, auf die Messung auswirken und das Messergebnis gegebenenfalls beeinträchtigen. Daher kann das Ende der Messhilfe, welches mit der Messeinheit der Messvorrichtung verbunden oder verbindbar ist, schräg an der Prüfrolle abgeführt werden. Der mit der Messeinheit in Verbindung stehende Abschnitt des Verbindungsabschnitts liegt somit wieder unmittelbar an der Prüfrolle auf.

Nach einer weiteren Ausführungsform ist der Verbindungsabschnitt mindestens 1,2 Mal um die Prüfrolle gewickelt.

Insbesondere ist der Verbindungsabschnitt mindestens 1,3 Mal, 1,4 Mal, 1,5 Mal, 1,6 Mal, 1,7 Mal, 1,8 Mal, 1,9 Mal oder 2 Mal um die Prüfrolle gewickelt. Die Messhilfe kann die Prüfrolle daher vorzugsweise mindestens um 360°, 365°, 370°, 375°, 380°, 390°, 400°, 450°, 500°, 540°, 600°, 720°, 800°, 900° oder mehr umschlingen. Beispielsweise kann der Verbindungsabschnitt mehrfach um die Prüfrolle gewickelt werden. Je größer der Abschnitt ist, an dem sich der Verbindungsabschnitt überlappt, desto größer ist die selbsthemmende Haltekraft an der Prüfrolle.

Gemäß einer weiteren Ausführungsform umfasst das System eine Haltevorrichtung einer Prüfvorrichtung. Die Haltevorrichtung kann vorzugsweise z.B. einen Karabiner und/oder Schäkel umfassen oder daraus bestehen.

Die Befestigungsvorrichtung der Messhilfe kann an der Haltevorrichtung befestigt, z.B. eingehängt, werden.

Gemäß einer Ausführungsform ist der Antrieb der Prüfrolle als Synchronmotor ausgebildet.

Dies ermöglicht insbesondere einen normalen Betrieb des Antriebs.

Die Erfindung betrifft auch ein Verfahren zum Prüfen und/oder Kalibrieren eines Prüfstands, insbesondere mit einer erfindungsgemäßen Vorrichtung oder einem erfindungsgemäßen System.

Bei dem Verfahren wird mittels einer Messvorrichtung eine am Außenumfang einer Prüfrolle des Prüfstands wirkende Tangentialkraft gemessen.

Eine Messhilfe der Messvorrichtung kann an einer Befestigungsmöglichkeit der Prüfrolle befestigt werden. Alternativ kann auch eine Befestigung der Messhilfe mittels einer Selbsthemmung erfolgen.

Insbesondere kann hierzu eine Befestigungsvorrichtung einer Messhilfe an einer Haltevorrichtung der Prüfvorrichtung, z.B. der Referenzkrafterzeugung, befestigt werden.

Zuvor oder anschließend kann eine Positioniervorrichtung der Messhilfe an der Prüfrolle fixiert wird. Beispielsweise kann der Verbindungsabschnitt der Messhilfe mittels eines Klebebands an der Prüfrolle positioniert werden.

Ein Verbindungsabschnitt der Messhilfe kann derart um die Prüfrolle geführt werden, dass der Verbindungsabschnitt zumindest abschnittsweise überlappt.

Die Prüfrolle kann hierbei, z.B. manuell oder mittels eines elektrischen und/oder mechanischen Antriebs, in Rotation versetzt werden. Der Verbindungsabschnitt wickelt sich dabei um die Prüfrolle auf. Die Positioniervorrichtung sorgt hierbei dafür, dass der Verbindungsabschnitt in der gewünschten Position verbleibt.

Der Verbindungsabschnitt überlappt sich nach einer vollständigen Drehung der Prüfrolle selbst und es kommt zu einer Selbsthemmung.

Ein bei einer Fahrzeugprüfung die Prüfrolle antreibender Antrieb des Prüfstands wird derart gesteuert, dass der Antrieb die zum Prüfen und/oder Kalibrieren des Prüfstands benötigte Kraft einleitet.

Dabei versetzt der Antrieb die Prüfrolle um wenigstens eine viertelte Rollenumdrehung in Rotation.

Vorzugsweise kann zunächst eine Justierung erfolgen. Die Prüfrolle kann insbesondere gegen den Referenzkraftsensor gespannt werden.

Der Referenzkraftsensor und die Drehmomentstütze werden bei der Justierung derart aufeinander eingestellt, dass diese dieselbe Kraft anzeigen. Zeigt folglich der Referenzkraftsensor eine Kraft X an, so zeigt auch ein Sensor der Drehmomentstütze dieselbe Kraft X an. Die bei der Anordnung wirkenden Hebel spielen hierbei keine Rolle.

Beim Prüfen und/oder Kalibrieren des Prüfstands sorgt der Antrieb für die Krafteinleitung.

Ein Sollwert kann am Referenzkraftsensor mittels einer Referenzkrafterzeugung eingestellt werden.

Beispielsweise kann eine zeitsynchrone Messung am Referenzkraftsensor und an der Drehmomentstütze erfolgen.

Gemäß einer Ausführungsform werden diskrete Messpunkte angefahren. Alternativ oder zusätzlich wird die Kraft kontinuierlich verändert, insbesondere erhöht.

Ist die Referenzkrafterzeugung z.B. als Hydraulik- und/oder Pneumatikzylinder ausgebildet, kann eine gleichmäßige Kraft angefahren werden. Diese kann über eine Hydraulik bzw. Pneumatik über mehrere Sekunden, z.B. 3 Sekunden, stabil gehalten werden. Die Kraft kann zwischen den Messpunkten wieder auf Null gefahren werden. Alternativ kann die Kraft von einem Messpunkt zum nächsten hochgefahren werden, ohne dazwischen herunterzufahren.

Ferner kann die Kraft auch kontinuierlich erhöht bzw. erniedrigt werden.

In einer Auswertevorrichtung kann dann die Abweichung zwischen einem Sollwert am Referenzkraftsensor und einem Istwert am Antrieb bzw. der Drehmomentstütze ermittelt werden.

Optional kann gegen den Block gefahren werden. In diesem Bereich kann z.B. die Funktionsweise des Antriebs geprüft werden.

Alle hier beschriebenen Ausführungsformen und Bauteile der Vorrichtungen sind insbesondere dazu ausgebildet, insbesondere mittels der Steuerungsvorrichtung, nach dem hier beschriebenen Verfahren betrieben zu werden. Ferner können alle hier beschriebenen Ausführungsformen der Vorrichtungen sowie alle hier beschriebenen Ausführungsformen des Verfahrens jeweils miteinander kombiniert werden, insbesondere auch losgelöst von der konkreten Ausgestaltung, in deren Zusammenhang sie erwähnt werden.

Die Erfindung wird im Folgenden beispielhaft unter Bezugnahme auf die Zeichnungen beschrieben. Es zeigen:
- Fig. 1: eine schematische Darstellung eines Prüfstands gemäß Stand der Technik,
- Fig. 2: eine schematische Darstellung einer Prüfvorrichtung gemäß Stand der Technik,
- Fig. 3: eine schematische Darstellung einer Ausführungsform einer Messhilfe einer erfindungsgemäßen Vorrichtung,
- Fig. 4: eine schematische Darstellung einer Ausführungsform einer Messhilfe einer erfindungsgemäßen Vorrichtung im montierten Zustand,
- Fig. 5: eine Draufsicht einer Ausführungsform einer Messhilfe einer erfindungsgemäßen Vorrichtung im montierten Zustand,
- Fig. 6: eine teilperspektivische Vorderansicht einer Ausführungsform einer erfindungsgemäßen Vorrichtung,
- Fig. 7: einen möglichen Verlauf des Stroms und der Drehzahl, und
- Fig. 8 bis 10: mögliche Messverläufe.

Zunächst ist zu bemerken, dass die dargestellten Ausführungsformen rein beispielhafter Natur sind. So können einzelne Merkmale nicht nur in der gezeigten Kombination, sondern auch in Alleinstellung oder in anderen technisch sinnvollen Kombinationen realisiert sein. Beispielsweise können die Merkmale einer Ausführungsform beliebig mit Merkmalen einer anderen Ausführungsform kombiniert werden. Insbesondere können stets zwei Prüfrollen oder lediglich eine Prüfrolle vorgesehen sein.

Enthält eine Figur ein Bezugszeichen, welches im unmittelbar zugehörigen Beschreibungstext nicht erläutert wird, so wird auf die entsprechenden vorhergehenden bzw. nachfolgenden Ausführungen in der Figurenbeschreibung Bezug genommen. Es werden für gleiche bzw. vergleichbare Bauteile in den Figuren dieselben Bezugszeichen verwendet und diese nicht nochmals erläutert.

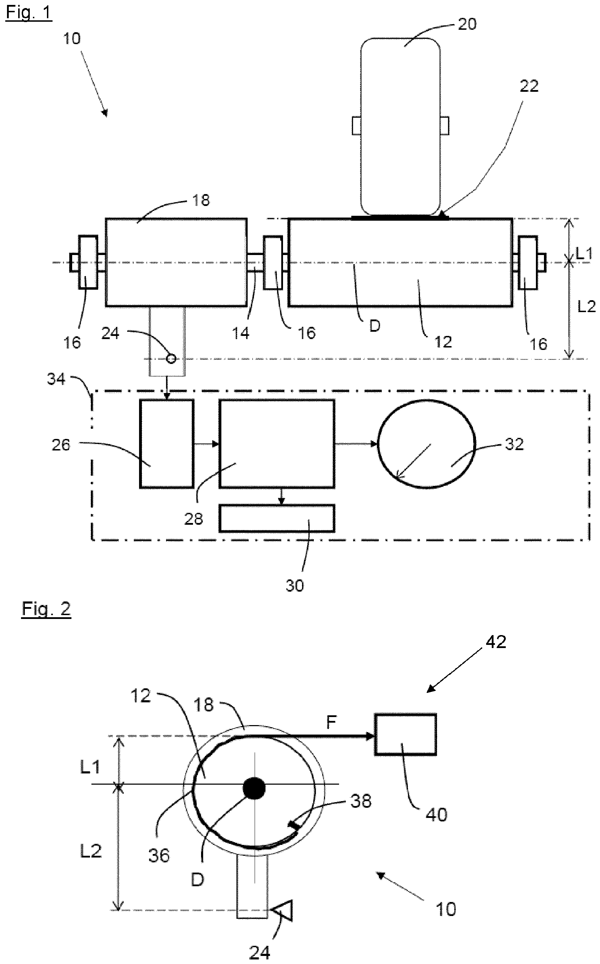

Fig. 1 zeigt einen Prüfstand 10 mit einer Prüfrolle 12, welche an einer als Arm 14 ausgebildeten Welle drehbar um eine Drehachse D gelagert ist. Für die Welle 14 sind mehrere Lager 16 vorgesehen. Die Welle 14 kann über einen Antrieb 18, welcher auch als Bremse dienen kann, angetrieben werden.

Auf der Prüfrolle 12 ist ein Rad 20 eines Kraftfahrzeugs gezeigt, welches an einem Kraftübertragungsbereich 22 Kraft auf die Prüfrolle 12 überträgt.

Der Antrieb 18 samt Welle 14 ist pendelnd gelagert. Ein Sensor 24 dient hierbei als Gegenstütze. Die Kraft wird am Sensor 24 über eine Drehmomentmessung bestimmt. Wird das Rad 20 beschleunigt oder gebremst, wird die dabei entstehende Kraft über den Kraftübertragungsbereich 22 auf die Prüfrolle 12 übertragen. Diese Kraft wird über den Sensor 24 gemessen.

Der Sensor 24 ist mit einem Messverstärker 26 verbunden, welcher wiederum mit einer Messdatenverarbeitungsvorrichtung 28 verbunden ist. Die Messdatenverarbeitungsvorrichtung 28 weist eine Schnittstelle 30, z.B. eine ASA-Schnittstelle, sowie eine Messanzeige 32 auf.

Der Messverstärker 26 und die Messdatenverarbeitungsvorrichtung 28 sind Teil einer elektrischen Messkette 34.

Die drehmomentbasierte Messung benötigt das Verhältnis eines ersten Hebels L1 zu einem zweiten Hebel L2. Der erste Hebel L1 erstreckt sich von der Drehachse D der Prüfrolle 12 bis zum Kraftübertragungsbereich 22 auf der Rollenoberfläche. Der zweite Hebel L2 erstreckt sich von der Drehachse D der Prüfrolle 12 zur Gegenstütze 24. Die Kraft an der Gegenstütze 24 ergibt sich dadurch im Verhältnis von L1 zu L2.

Bisher wird zum Kalibrieren direkt am Sensor 24 eine Referenzkraft eingeleitet. Die realen mechanischen Hebel L1 und L2 werden dabei nicht mit berücksichtigt. Diese werden einmalig berechnet und als gegeben hingenommen. Es wird somit lediglich die elektrische Messkette 34 ab dem Sensor 24 kalibriert. Eine Änderung des Verhältnisses des ersten Hebels L1 zum zweiten Hebel L2 wird hingegen nicht berücksichtigt. Das Verhältnis ändert sich in der Praxis jedoch häufig, da die Prüfrolle 12 im Laufe der Zeit abgefahren wird.

Fig. 2 zeigt eine Vorrichtung zum Prüfen und/oder Kalibrieren eines Prüfstands 10, bei der die zu messende Tangentialkraft F unmittelbar abgegriffen wird.

Eine als Band 36 ausgebildete Messhilfe ist an einem Ende über eine Befestigungsmöglichkeit 38 mit der Prüfrolle 12 verbunden und zumindest abschnittsweise um die Prüfrolle 12 geschlungen.

Am anderen Ende ist das Band 36 mit einer als Zugkraftmesser ausgebildeten Messeinheit 40 einer Messvorrichtung 42 verbunden.

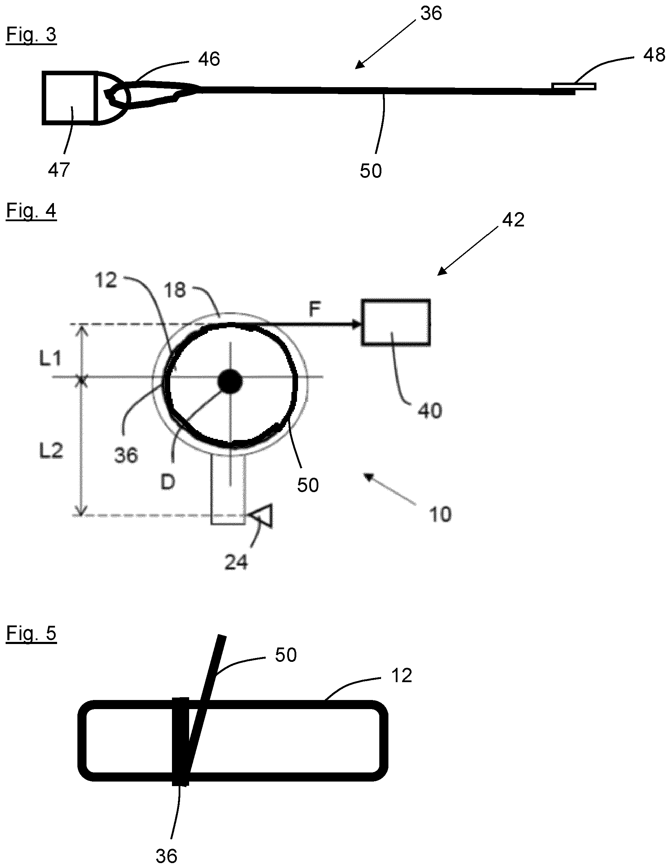

Fig. 3 zeigt eine Messhilfe 36, welche an einem Ende eine Befestigungsvorrichtung 46 zur Befestigung an einer Haltevorrichtung 47 aufweist.

Die Messhilfe 36 umfasst am anderen Ende eine als Klebeband ausgebildete Positioniervorrichtung 48 zur Positionierung an einer Prüfrolle 12 des Prüfstands 10.

Zwischen der Befestigungsvorrichtung 46 und der Positioniervorrichtung 48 erstreckt sich ein Verbindungsabschnitt 50.

Wie in Fig. 4 zu sehen ist, kann der Verbindungsabschnitt 50 mehrmals um die Prüfrolle 12 gewickelt werden und sich dadurch selbst hemmen. Eine fest an der Prüfrolle 12 angeordnete Befestigungsmöglichkeit 38 ist somit nicht notwendig.

Damit die Dicke mehrerer übereinander angeordneter Verbindungsabschnitte 50 die Messung nicht beeinflusst, kann der Verbindungsabschnitt 50, wie in Fig. 5 gezeigt, schräg in Richtung Haltevorrichtung 47 geführt werden.

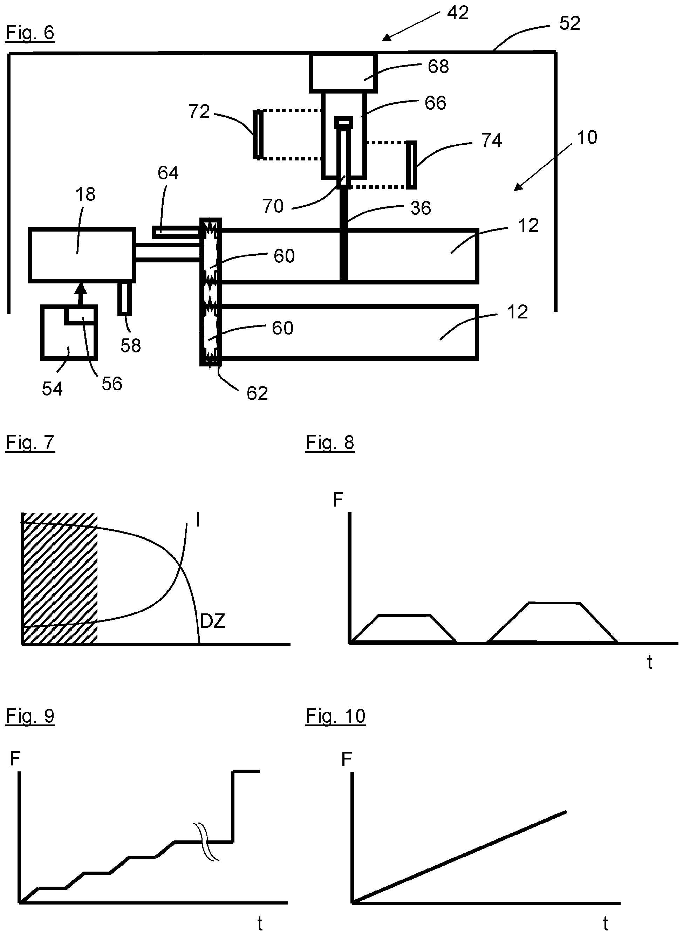

Fig. 6 zeigt eine Vorrichtung zum Prüfen und/oder Kalibrieren eines Prüfstands 10, welche ein Gestell 52 umfasst, das auf den Prüfstand 10 aufgesetzt werden kann.

Das Gestell 52 steht aufrecht auf bzw. über den Prüfrollen 12, welche zur besseren Sichtbarkeit teilperspektivisch dargestellt sind. Bei einer reinen Vorderansicht würde die vordere Prüfrolle 12 die hintere Prüfrolle 12 verdecken.

Die erzeugte Kraft wirkt somit nach unten, sodass auch das Gestell 52 nach unten gedrückt wird.

Eine Fixierung ist nicht notwendig, wodurch die Zeit für die Montage und/oder Demontage gering gehalten wird.

Eine Messvorrichtung 42 ist dazu ausgebildet, eine am Außenumfang der Prüfrolle 12 des Prüfstands wirkende Tangentialkraft zu messen.

Eine Steuerungsvorrichtung 54 weist einen, insbesondere einsteckbaren, Frequenzumrichter 56 auf.

Die Steuerungsvorrichtung 54 kann den Antrieb 18 der Prüfrolle 12 derart steuern, dass der Antrieb 18 die zum Prüfen und/oder Kalibrieren des Prüfstands 10 benötigte Kraft einleitet.

Der Istwert kann an der Drehmomentstütze 58 abgegriffen werden.

Die Prüfrollen 12 stehen über Zahnräder 60 und eine Endloskette 62 oder ein Endlosband miteinander in Verbindung. Die Zahnräder 60 können insbesondere zwischen 10 und 50 Zähne, vorzugsweise 30 Zähne, aufweisen.

An einem Zahnrad 60 kann optional ein Pulszähler 64 vorgesehen sein. Dadurch kann z.B. ein Drehzahlabgleich erfolgen.

Ein Ende einer als Band 36 ausgebildeten Messhilfe ist, z.B. selbsthemmend, an der Prüfrolle 12 befestigt. Das andere Ende ist mit einer Referenzkrafterzeugung 66 der Messvorrichtung 42 verbunden. Die Referenzkrafterzeugung 66 ist im Tangentialzweig angeordnet, sodass die Tangentialkraft F unmittelbar darauf wirkt.

Die Messvorrichtung 42 umfasst auch einen Referenzkraftsensor 68 zur Bestimmung eines Sollwertes.

Die Referenzkrafterzeugung 66 umfasst einen Zylinder 70, z.B. Hydraulikzylinder, mit einem Kolben, welcher aus- und/oder eingefahren werden kann.

Der Antrieb 18 versetzt die Prüfrolle 12 um wenigstens eine viertelte Rollenumdrehung in Rotation. Der Zylinder 70 stellt hierbei einen benötigten Messweg zur Verfügung. Die Prüfrolle 12 kann insbesondere vor und anschließend zurück bewegt werden. Der Zylinder 70 fährt dabei aus und anschließend wieder ein.

In einer Auswertevorrichtung kann dann die Abweichung zwischen einem Sollwert am Referenzkraftsensor 68 und einem Istwert am Antrieb 18 bzw. der Drehmomentstütze 58 ermittelt werden. Bewegt sich die Abweichung innerhalb bestimmter, vorgebbaren Grenzen, hat der Prüfstand 10 die Prüfung bestanden und ist kalibriert.

Die Referenzkrafterzeugung 66 kann optional eine Ölbremse 72 aufweisen. Über eine Verengung ist der Druck einstellbar.

Ferner kann die Referenzkrafterzeugung 66 optional einen Seilzuggeber 74 aufweisen. Hierüber kann der Weg gemessen werden.

Über den Pulszähler 64, die Ölbremse 72 und den Seilzuggeber 74 können weitere Werte ermittelt werden. So kann z.B. aus der Drehzahl, dem Druck und dem Weg der Umfang der Prüfrolle 12 bestimmt werden.

In Fig. 7 ist der Verlauf des Stroms I sowie der Drehzahl DZ dargestellt.

Im Stillstand sollte der Antrieb 18 nicht betrieben werden, da dieser sonst durchbrennt. Idealer Weise wird der Antrieb 18 im schraffierten Bereich gefahren. Ein Frequenzumrichter 56 reduziert die Frequenz vorzugsweise von 50 Hz auf 3 Hz.

In Fig. 8 ist ein möglicher Kraftverlauf über die Zeit t dargestellt. Beispielsweise können verschiedene Kräfte angefahren werden, z.B. 1 kN, 2 kN, 3 kN usw.

Jeder Messpunkt kann eine Zeit, z.B. 3 Sekunden, gehalten werden. Nach jedem Messpunkt kann die Kraft auf Null gefahren werden.

Alternativ kann, wie in Fig. 9 dargestellt ist, die Kraft kontinuierlich von einem Messpunkt zum nächsten Messpunkt erhöht werden. Auch hier kann jeder Messpunkt eine Zeit, z.B. 3 Sekunden, gehalten werden.

Ferner ist ein Anfahren gegen einen Block möglich, jedoch nur für kurze Zeit, um eine Beschädigung des Antriebs 18 zu vermeiden. Auf diese Weise kann z.B. die Funktionalität des Antriebs 18 bestimmt werden. Insbesondere kann überprüft werden, ob der Antrieb 18 die erforderliche Leistung bringt oder beschädigt ist.

Ferner kann eine Drehmomentkennlinie des Antriebs 18 bestimmt werden.

In Fig. 10 ist dargestellt, dass die Kraft beispielsweise durchgehend erhöht werden kann, ohne an Plateaus zu verweilen. Auch hier kann an bestimmten Messpunkten eine Messung erfolgen.

### Bezugszeichenliste

- 10: Prüfstand
- 12: Prüfrolle
- 14: Arm, Welle
- 16: Lager
- 18: Antrieb
- 20: Rad
- 22: Kraftübertragungsbereich
- 24: Sensor, Gegenstütze
- 26: Messverstärker
- 28: Messdatenverarbeitungsvorrichtung
- 30: Schnittstelle
- 32: Messanzeige
- 34: elektrische Messkette
- 36: Band, Messhilfe
- 38: Befestigungsmöglichkeit
- 40: Messeinheit, Zugkraftmesser
- 42: Messvorrichtung
- 46: Befestigungsvorrichtung
- 47: Haltevorrichtung
- 48: Klebeband, Positioniervorrichtung
- 50: Verbindungsabschnitt
- 52: Gestell
- 54: Steuerungsvorrichtung
- 56: Frequenzumrichter
- 58: Drehmomentstütze
- 60: Zahnrad
- 62: Endloskette
- 64: Pulszähler
- 66: Referenzkrafterzeugung
- 68: Referenzkraftsensor
- 70: Zylinder
- 72: Ölbremse
- 74: Seilzuggeber

- D: Drehachse
- L1: erster Hebel
- L2: zweiter Hebel
- F: Tangentialkraft
- I: Strom
- DZ: Drehzahl
- t: Zeit

## Patentansprüche

1. Vorrichtung zum Prüfen und/oder Kalibrieren eines Prüfstands (10), insbesondere für Kraftfahrzeuge, umfassend
eine Messvorrichtung (42), die dazu ausgebildet ist, eine am Außenumfang einer Prüfrolle (12) des Prüfstands (10) wirkende Tangentialkraft (F) zu messen, und
eine Steuerungsvorrichtung (54), die dazu ausgebildet ist, einen bei einer Fahrzeugprüfung die Prüfrolle (12) antreibenden Antrieb (18) des Prüfstands (10) derart zu steuern, dass der Antrieb (18) die zum Prüfen und/oder Kalibrieren des Prüfstands (10) benötigte Kraft einleitet, wobei der Antrieb (18) die Prüfrolle (12) um wenigstens eine viertelte Rollenumdrehung in Rotation versetzt.

2. Vorrichtung nach Anspruch 1,
**dadurch gekennzeichnet,**
**dass** die Steuerungsvorrichtung (54) einen Frequenzumrichter (56) umfasst.

3. Vorrichtung nach Anspruch 1 oder 2,
**dadurch gekennzeichnet,**
**dass** eine Referenzkrafterzeugung (66) vorgesehen ist, welche, insbesondere elektrisch, verstellbar ist.

4. Vorrichtung nach Anspruch 3,
**dadurch gekennzeichnet,**
**dass** die Referenzkrafterzeugung (66) einen Zylinder (70), insbesondere Hydraulik- und/oder Pneumatikzylinder, und/oder eine Feder umfasst oder als solche ausgebildet ist.

5. Vorrichtung nach Anspruch 3 oder 4,
**dadurch gekennzeichnet,**
**dass** eine Referenzkrafterzeugung (66) unmittelbar im Tangentialzweig angeordnet ist.

6. Vorrichtung nach einem der vorhergehenden Ansprüche,
**dadurch gekennzeichnet,**
**dass** eine Messhilfe (36) vorgesehen ist, welche
eine Befestigungsvorrichtung (46) zur Befestigung an einer Haltevorrichtung (47) der Vorrichtung, insbesondere einer Referenzkrafterzeugung (66), eine Positioniervorrichtung (48) zur Positionierung an der Prüfrolle (12) des Prüfstands (10), und
einen sich zwischen der Befestigungsvorrichtung (46) und der Positioniervorrichtung (48) erstreckenden Verbindungsabschnitt (50) umfasst, wobei der Verbindungsabschnitt (50) selbsthemmend an der Prüfrolle (12) befestigbar oder befestigt ist.

7. System mit einer Vorrichtung zum Prüfen und/oder Kalibrieren eines Prüfstands (10), insbesondere für Kraftfahrzeuge, nach einem der vorhergehenden Ansprüche und einem Prüfstand (10) mit zumindest einer Prüfrolle (12) und einem Antrieb (18) für die Prüfrolle (12).

8. System nach Anspruch 7,
**dadurch gekennzeichnet,**
**dass** der Antrieb (18) der Prüfrolle (12) als Synchronmotor ausgebildet ist.

9. Verfahren zum Prüfen und/oder Kalibrieren eines Prüfstands (10), insbesondere mit einer Vorrichtung nach einem der Ansprüche 1 bis 6 oder einem System nach Anspruch 7 oder 8,
bei dem mittels einer Messvorrichtung (42) eine am Außenumfang einer Prüfrolle (12) des Prüfstands (10) wirkende Tangentialkraft (F) gemessen wird, wobei
ein bei einer Fahrzeugprüfung die Prüfrolle (12) antreibender Antrieb (18) des Prüfstands (10) derart gesteuert wird, dass der Antrieb (18) die zum Prüfen und/oder Kalibrieren des Prüfstands (10) benötigte Kraft einleitet, wobei der Antrieb (18) die Prüfrolle (12) um wenigstens eine viertelte Rollenumdrehung in Rotation versetzt.

10. Verfahren nach Anspruch 9,
**dadurch gekennzeichnet,**
**dass** diskrete Messpunkte angefahren werden und/oder dass die Kraft kontinuierlich verändert, insbesondere erhöht, wird.
